# EUROPEAN PATENT APPLICATION

(11) **EP 1 990 361 A1**
(43) Date of publication of application: **12.11.2008**
(21) Application number: 07737636.6
(22) Date of filing: 01.03.2007
(51) Int. Cl.: C08L 9/02, C08K 5/36, C08L 23/16

(54) **RUBBER COMPOSITION, CROSSLINKED RUBBER AND MOLDED ARTICLE**

(30) Priority: 01.03.2006 JP 2006054310
(71) Applicant: JSR Corporation, Tokyo 104-8410 (JP)
(72) Inventor: HASEGAWA, Mamoru, Tokyo 104-8410 (JP); HASEGAWA, Kenji, Tokyo 104-8410 (JP); TADAKI, Toshihiro, Tokyo 104-8410 (JP)
(74) Representative: TBK-Patent
(86) International application number: PCT/JP2007/053970
(87) International publication number: WO 2007/100064

(57) **Abstract**

A rubber composition includes (i) an α,β-unsaturated nitrile conjugated diene rubber containing structural units derived from a conjugated diene in an amount of 30 to 60 mass% with respect to the total structural units, (ii) an ethylene-α-olefin-nonconjugated diene copolymer rubber having a limiting viscosity of 3.3 dl/g or more measured at 135°C in a decalin solvent, and (iii) a crosslinking agent. The rubber composition can produce a crosslinked rubber and a molded article exhibiting excellent oil resistance and heat resistance in a well-balanced manner.

## Description

### TECHNICAL FIELD

The present invention relates to a rubber composition, a crosslinked rubber, and a molded article. More particularly, the present invention relates to a rubber composition that may produce a crosslinked rubber and a molded article which exhibit excellent oil resistance and heat resistance, a crosslinked rubber, and a molded article.

### BACKGROUND ART

A rubber molded article (or crosslinked rubber) has been produced by blending two or more elastomers to have properties (such as oil resistance, weatherability, and heat resistance) which cannot be obtained by a single elastomer. For example, a method in which an acrylonitrile-butadiene rubber (NBR) is mixed with an ethylene-propylene-nonconjugated diene copolymer rubber (EPDM) and the mixed rubber is crosslinked using a crosslinking agent has been proposed. Specifically, a rubber composition using specific NBR and EPDM has been disclosed with the aim of obtaining an oil-resistant rubber composition having good mechanical properties (see Patent Document 1, for example).

Patent Document 1: JP-B-4-75931

### DISCLOSURE OF THE INVENTION

However, a crosslinked rubber and its molded article have been desired continually to exhibit further improved oil resistance and heat resistance in addition to an improvement in mechanical properties.

The present invention was conceived in view of the above-mentioned problems of the conventional art. An object of the present invention is to provide a rubber composition that may produce a crosslinked rubber and a molded article which exhibits improved oil resistance and heat resistance in a well-balanced manner, a crosslinked rubber, and a molded article.

The inventors of the present invention conducted extensive studies in order to achieve the above object. As a result, the inventors found that the above object can be achieved by a rubber composition obtained by mixing a specific α,β-unsaturated nitrile conjugated diene rubber with an ethylene-α-olefin-nonconjugated diene copolymer rubber having a high molecular weight, and crosslinking the α,β-unsaturated nitrile conjugated diene rubber and the ethylene-α-olefin-nonconjugated diene copolymer rubber using a crosslinking agent. This finding has led to the completion of the present invention.

According to the present invention, the following rubber composition, crosslinked rubber, and molded article are provided.

[1] A rubber composition comprising (i) an α,β-unsaturated nitrile conjugated diene rubber containing structural units derived from a conjugated diene in an amount of 30 to 60 mass% with respect to the total structural units, (ii) an ethylene-α-olefin-nonconjugated diene copolymer rubber having a limiting viscosity of 3.3 dl/g or more measured at 135°C in a decalin solvent, and (iii) a crosslinking agent.

[2] The rubber composition according to [1], wherein the crosslinking agent (iii) is a crosslinking agent capable of crosslinking the α,β-unsaturated nitrile conjugated diene rubber (i) and the ethylene-α-olefin-nonconjugated diene copolymer rubber (ii) via a monosulfide bond.

[3] The rubber composition according to [1] or [2], wherein the α,β-unsaturated nitrile conjugated diene rubber (i) is an acrylonitrile-butadiene rubber.

[4] The rubber composition according to any one of [1] to [3], wherein the ethylene-α-olefin-nonconjugated diene copolymer rubber (ii) is an ethylene-propylene-nonconjugated diene copolymer rubber.

[5] A crosslinked rubber obtained by crosslinking the rubber composition according to any one of [1] to [4].

[6] A molded article comprising the crosslinked rubber according to [5].

The rubber composition according to the present invention can produce a crosslinked rubber and a molded article which exhibits improved oil resistance and heat resistance in a well-balanced manner.

The crosslinked rubber according to the present invention exhibits improved oil resistance and heat resistance in a well-balanced manner.

The molded article according to the present invention exhibits improved oil resistance and heat resistance in a well-balanced manner.

### BEST MODE FOR CARRYING OUT THE INVENTION

Preferred embodiments of the present invention are described below. Note that the present invention is not limited to the following embodiments. It is to be understood that appropriate modifications and improvements may be made in the following embodiments within the scope of the present invention based on the knowledge of a person skilled in the art.

One embodiment of a rubber composition according to the present invention comprises (i) an α,β-unsaturated nitrile conjugated diene rubber containing structural units derived from a conjugated diene in an amount of 30 to 60 mass% with respect to the total structural units (hereinafter may be referred to as "component (i)"), (ii) an ethylene-α-olefin-nonconjugated diene copolymer rubber having a limiting viscosity of 3.3 dl/g or more measured at 135°C in a decalin solvent (hereinafter may be referred to as "component (ii)"), and (iii) a crosslinking agent. The details are described below. Note that the term "polymer" includes a copolymer and a homopolymer.

### (i) α,β-unsaturated nitrile conjugated diene rubber

The α,β-unsaturated nitrile conjugated diene rubber (i) contained in the rubber composition according to this embodiment is a copolymer obtained by copolymerizing a conjugated diene, an α,β-unsaturated nitrile, and optional other monomers copolymerizable with these compounds (hereinafter may be referred to as "other monomers"). Therefore, the component (i) contains structural units derived from the conjugated diene and structural units derived from the α,β-unsaturated nitrile.

Examples of the above conjugated diene include butadiene, isoprene, 1,3-hexadiene, 2,3-dimethylbutadiene, 2-trimethoxysilyl-1,3-butadiene, 1,3-pentadiene, 2,4-dimethyl-1,3-butadiene, and the like. Among these, butadiene is preferable.

The proportion of the structural units derived from the conjugated diene with respect to the total structural units needs to be 30 to 60 mass%, preferably 30 to 55 mass%, and more preferably 35 to 55 mass%. If the above proportion is below 30 mass%, the low-temperature properties of a molded article obtained by using the rubber composition according to the present invention tend to decrease. If the above proportion is beyond 60 mass%, on the other hand, the oil resistance of a molded article obtained by using the rubber composition according to the present invention tends to decrease.

Examples of the α,β-unsaturated nitrile include acrylonitrile, methacrylonitrile, α-ethylacrylonitrile, α-isopropylacrylonitrile, α-chloroacrylonitrile, α-fluoroacrylonitrile, ethacrynitrile, and the like. Among these, acrylonitrile is preferable.

The proportion of the structural units derived from the α,β-unsaturated nitrile with respect to the total structural units is preferably 20 to 70 mass%, more preferably 20 to 55 mass%, and particularly preferably 25 to 50 mass%. If the above proportion is below 20 mass%, the oil resistance of a molded article obtained by using the rubber composition according to the present invention tends to decrease. If the above proportion is beyond 70 mass%, on the other hand, the low-temperature properties of a molded article obtained by using the rubber composition according to the present invention tend to decrease.

Examples of the other monomers include alkyl (meth)acrylate monomers such as methyl (meth)acrylate, ethyl (meth)acrylate, n-propyl (meth)acrylate, iso-propyl (meth)acrylate, n-butyl (meth)acrylate, n-amyl (meth)acrylate, n-hexyl (meth)acrylate, 2-ethylhexyl (meth)acrylate, and cyclohexyl (meth)acrylate, and alkoxyalkyl (meth)acrylate monomers such as methoxyethyl (meth)acrylate and ethoxyethyl (meth)acrylate. Among these, ethyl acrylate, n-butyl acrylate, and methoxyethyl acrylate are preferable.

The proportion of the structural units derived from the other monomers with respect to the total structural units is preferably 0 to 50 mass%, more preferably 10 to 45 mass%, and particularly preferably 15 to 40 mass%. If the above proportion is beyond 50 mass%, a molded article obtained by using the rubber composition according to the present invention tends to exhibit insufficient strength.

Examples of polymerization procedure of the component (i) include, for example, radical polymerization method and anionic polymerization method, however not limited to these methods. Examples of radical polymerization method include mass polymerization method, suspension polymerization method, emulsion polymerization method, and the like. It is particularly preferable to use emulsion polymerization method because stable emulsion dispersion can be obtained upon completion of polymerization. The emulsion polymerization may be carried out by, for example, emulsifying monomers mixed in a specific ratio in an aqueous medium in the presence of an emulsifier, adding a radical polymerization initiator to initiate polymerization, and adding a polymerization terminator to terminate polymerization when a specific polymerization conversion rate has been reached.

Examples of the above emulsifier include an anionic surfactant, a nonionic surfactant, a cationic surfactant, and an amphoteric surfactant. Among these, the anionic surfactant is preferable. As the anionic surfactant, a long chain fatty acid salt having 10 or more carbon atoms, a rosinate, or the like is generally used. Specifically, a sodium salt, a potassium salt, or the like of capric acid, lauric acid, myristic acid, palmitic acid, oleic acid, or stearic acid may be suitably used. These emulsifiers may be used either individually or in combination of two or more kinds.

As the above radical polymerization initiator, an organic peroxide such as benzoyl peroxide, lauroyl peroxide, t-butyl hydroperoxide, cumene hydroperoxide, paramethane hydroperoxide, di-t-butyl peroxide, or dicumyl peroxide may be used. A diazo compound as typified by azobisisobutyronitrile, an inorganic peroxide as typified by potassium persulfate, a redox catalyst as typified by the combination of the peroxide and ferrous sulfate, or the like may also be used. These radical polymerization initiators may be used individually or in combination of two or more kinds.

In addition, a chain transfer agent may be used in order to adjust the molecular weight of the component (i). As the chain transfer agent, an alkylmercaptan such as t-dodecyl mercaptan or n-dodecyl mercaptan, carbon tetrachloride, thioglycols, diterpene, terpinolene, a γ-terpinene, or the like may be used.

When polymerizing the component (i), each of the monomers, the emulsifier, the radical polymerization initiator, the chain transfer agent, and the like may be put in a reaction vessel all together to initiate polymerization, or these components may be added successively or intermittently during the reaction. The component (i) is preferably polymerized in an atmosphere where oxygen has been removed at a temperature of 0 to 100°C, more preferably 0 to 80°C. The reaction conditions such as temperature or stirring speed may be appropriately changed during the reaction. Polymerization may be carried out either continuously or batch-wise.

The polymerization reaction is normally terminated by adding a polymerization terminator when a specific polymerization conversion rate has been reached. As the above polymerization terminator, an amine compound such as hydroxylamine or diethylhydroxylamine, a quinone compound such as hydroquinone, or the like may be used.

After polymerization, unreacted monomers are removed as necessary from the reaction system by steam distillation or the like, followed by coagulation of latex to obtain the component (i).

The molecular weight of the component (i) is not particularly limited. The Mooney viscosity (ML₁₊₄ (100°C)) of the component (i), however, is preferably 5 to 100, and particularly preferably 5 to 60. If the Mooney viscosity (ML₁₊₄, 100°C) is below 5, mechanical strength may deteriorate. If the Mooney viscosity is beyond 100, on the other hand, processing properties such as kneadability may deteriorate.

The α,β-unsaturated nitrile conjugated diene rubber (i) is preferably an acrylonitrile-butadiene rubber (NBR), for example. The NBR contains structural units derived from butadiene (hereinafter may be referred to as "structural units (A)") and structural units derived from acrylonitrile (hereinafter may be referred to as "structural units (B)").

The proportion (content) of the structural units (A) in NBR with respect to the total structural units needs to be 30 to 60 mass%, preferably 30 to 55 mass%, and more preferably 35 to 55 mass%. If the content of the structural units (A) in NBR with respect to the total structural units is below 30 mass%, the rubber elasticity of a molded article obtained by using the rubber composition according to the present invention tends to decrease. If the proportion of the structural units (A) in NBR with respect to the total structural units is beyond 60 mass%, on the other hand, the oil resistance of a molded article obtained by using the rubber composition according to the present invention tends to decrease.

The proportion (content) of the structural units (B) in NBR with respect to the total structural units is preferably 20 to 70 mass%, more preferably 20 to 55 mass%, and particularly preferably 40 to 55 mass%. If the content of the structural units (B) in NBR with respect to the total structural units is below 35 mass%, the oil resistance of a molded article obtained by using the rubber composition according to the present invention tends to decrease. If the proportion of the structural units (B) in NBR with respect to the total structural units is beyond 60 mass%, on the other hand, the low-temperature properties of a molded article obtained by using the rubber composition according to the present invention tends to decrease.

### (ii) Ethylene-α-olefin-nonconjugated diene copolymer rubber

The ethylene-α-olefin-nonconjugated diene copolymer rubber (ii) has a limiting viscosity of 3.3 dl/g or more measured at 135°C in a decalin solvent. The limiting viscosity is preferably 4.0 to 12.0 dl/g, and more preferably 4.0 to 10.0 dl/g. If the above limiting viscosity is below 3.3 dl/g, the strength of a molded article obtained by using the rubber composition according to the present invention tends to decrease.

The ethylene-α-olefin-nonconjugated diene copolymer rubber (ii) includes a copolymer rubber of ethylene and propylene which does not contain a nonconjugated diene. The ethylene-α-olefin-nonconjugated diene copolymer rubber (ii) may also be an ethylene-propylene-nonconjugated diene copolymer rubber (EPDM) containing structural units derived from one or more kinds of nonconjugated dienes selected from ethylidenenorbornane(5-ethylidene-2-norbornene), cyclopentadiene, 1,4-hexadiene, methylenenorbornene, 4,7,8,9-tetrahydroindene, and the like, in addition to structural units derived from ethylene and propylene. Among these, the ethylene-propylene-nonconjugated diene copolymer rubber (EPDM) is preferable.

Examples of the α-olefin include 1-butene, 1-pentene, 1-hexene, 1-heptene, 1-octene in addition to propylene.

The content of the structural units derived from ethylene contained in the component (ii) with respect to the total structural units is preferably 50 to 80 mass%, more preferably 55 to 75 mass%, and particularly preferably 60 to 75 mass%. If the content of the above structural units is below 50 mass%, the strength of a molded article obtained by using the rubber composition according to the present invention tends to decrease. If the above content is beyond 80 mass%, on the other hand, the low-temperature properties of a molded article obtained by using the rubber composition according to the present invention tend to decrease.

The content of the structural units derived from the α-olefin contained in the component (ii) with respect to the total structural units is preferably 7 to 49.5 mass%, more preferably 14 to 44 mass%, and particularly preferably 15 to 38 mass%. If the content of the above structural units is below 7 mass%, the low-temperature properties of a molded article obtained by using the rubber composition according to the present invention tend to decrease. If the above content is beyond 49.5 mass%, on the other hand, the strength of a molded article obtained by using the rubber composition according to the present invention tends to decrease.

The content of the structural units derived from the nonconjugated diene contained in the component (ii) with respect to the total structural units is preferably 0.5 to 13 mass%, more preferably 1 to 11 mass%, and particularly preferably 2 to 10 mass%. If the content of the above structural units is below 0.5 mass%, the strength of a molded article obtained by using the rubber composition according to the present invention tends to decrease. If the above content is beyond 13 mass%, on the other hand, the processability of the rubber composition according to the present invention tends to deteriorate.

Examples of polymerization procedure of the component (ii) include, for example, a method of polymerization in the presence of a heretofore known catalyst such as a vanadium catalyst, a titanium catalyst, or a metallocene catalyst, however not limited to this method. More specifically, when a vanadium catalyst is used, ethylene, the α-olefin, and the optional nonconjugated diene may be polymerized in the presence of a catalyst comprising a vanadium compound which can be dissolved in at least one solvent and at least one organoaluminum compound. In this case, if necessary, the components may be polymerized while supplying hydrogen as a molecular weight modifier. The above polymerization may be carried out by either a gas-phase method (fluid bed or stirring bed) or a liquid-phase method (slurry method or solution method).

The component (ii) contained in the rubber composition according to this embodiment is preferably a so-called oil-extended rubber which is a mixed composition of the ethylene-α-olefin-nonconjugated diene copolymer rubber and extender oil. When such an oil-extended rubber is used, processing is facilitated due to an increase in slip characteristics.

As the above extender oil, for example, a mineral oil, a synthetic oil, or the like may be used. Examples of the mineral oil include an aromatic extender oil, a naphthenic extender oil, and a paraffinic extender oil. Examples of the synthetic oil include an alkylbenzene oil.

Examples of commercially-available products of the aromatic extender oil include Diana Process Oil AC-12, AC-460, AH-16, and AH-58 (manufactured by Idemitsu Kosan Co., Ltd.), Mobilsol K, 22, and 130 (manufactured by Exxon Mobil Corporation), Kyoseki Process X50, X100, and X140 (manufactured by Nikko Kyoseki Co., Ltd.), Rezox No. 3 and Dutorex 729UK (manufactured by Shell Chemicals Co., Ltd.), Komorex 200, 300, 500, and 700 (manufactured by Nippon Oil Corporation, former Nippon Oil), Esso Process Oil 110 and 120 (manufactured by Exxon Mobil Corporation), and Mitsubishi 34 Heavy Process Oil, Mitsubishi 44 Heavy Process Oil, Mitsubishi 38 Heavy Process Oil, and Mitsubishi 39 Heavy Process Oil (manufactured by Nippon Oil Corporation, former Mitsubishi Oil).

Examples of commercially-available products of the naphthenic extender oil include Diana Process Oil NS-24, NS-100, NM-26, NM-280, and NP-24 (manufactured by Idemitsu Kosan Co., Ltd.), Naprex 38 (manufactured by Exxon Mobil Corporation), Fukkol FLEX #1060N, #1150N, #1400N, #2040N, and #2050N (manufactured by Fuji Kosan Co., Ltd.), Kyoseki Process R-25, R-50, R-200, and R-1000 (manufactured by Nikko Kyoseki Co., Ltd.), Shellflex 371JY, 371N, 451, N-40, 22, 22R, 32R, 100R, 100S, 100SA, 220RS, 220S, 260, 320R, and 680 (manufactured by Shell Chemicals Co., Ltd.), Komorex No. 2 Process Oil (manufactured by Nippon Oil Corporation, former Nippon Oil), Esso Process Oil L-2 and 765 (manufactured by ExxonMobil Corporation), and Mitsubishi 20 Light Process Oil (manufactured by Nippon Oil Corporation, former Mitsubishi Oil Co., Ltd.).

Examples of commercially-available products of the paraffinic extender oil include Diana Process Oil PW-90, PW-380, PS-32, PS-90, and PS-430 (manufactured by Idemitsu Kosan Co., Ltd.), Fukkol Process P-100, P-200, P-300, P-400, and P-500 (manufactured by Fuji Kosan Co., Ltd.), Kyoseki Process P-200, P-300, P-500, Kyoseki EPT 750, EPT 1000, and Kyoseki Process S90 (manufactured by Nikko Kyoseki Co., Ltd.), Lubrex 26, 100, and 460 (manufactured by Shell Chemicals Co., Ltd.), Esso Process Oil 815, 845, and B-1 (manufactured by Exxon Mobil Corporation), Naprex 32 (manufactured by Exxon Mobil Corporation), and Mitsubishi 10 Light Process Oil (manufactured by Nippon Oil Corporation, former Mitsubishi Oil Co., Ltd.).

The alkylbenzene oil is a hydrocarbon oil produced by reacting a propylene tetramer with benzene or reacting an n-olefin obtained by dehydrogenation of an n-paraffin with benzene. The alkylbenzene oil is a synthetic oil that contains an alkylbenzene such as a monoalkylbenzene, dialkylbenzene, trialkylbenzene, or diphenylalkane, for example.

The above-mentioned extender oils may be used in combination. The amount of the extender oil is preferably 5 to 200 parts by mass, more preferably 10 to 180 parts by mass, and particularly preferably 10 to 120 parts by mass, based on 100 parts by mass of the component (ii).

### (iii) Crosslinking agent

The crosslinking agent (iii) is not particularly limited. Examples of the crosslinking agent (iii) include sulfur, a sulfur compound, an organic peroxide, a phenol resin, and the like. It is preferable that the crosslinking agent (iii) be a crosslinking agent capable of crosslinking the α,β-unsaturated nitrile conjugated diene rubber (i) and the ethylene-α-olefin-nonconjugated diene copolymer rubber (ii) via a monosulfide bond in order to enable production of a crosslinked rubber and a molded article which exhibits further improved heat resistance while showing a good balance between oil resistance and heat resistance. For example, tetramethylthiuram disulfide (TMTD)-zinc oxide (for example, sulfur-donating crosslinking agent) may be added to a mixture of the component (i) and the component (ii) to obtain a tetramethylthiuram disulfide (TMTD)-zinc oxide system (sulfur-donating crosslinking system), and the resulting system may be vulcanized for a long period of time to obtain a rubber composition which is mainly monosulfide-crosslinked.

Specific examples of the crosslinking agent capable of crosslinking the α,β-unsaturated nitrile conjugated diene rubber (i) and the ethylene-α-olefin-nonconjugated diene copolymer rubber (ii) via a monosulfide bond include sulfur compounds such as Vulnoc R (manufactured by Ouchi Shinko Chemical Industrial Co., Ltd.), Nocceler TET (manufactured by Ouchi Shinko Chemical Industrial Co., Ltd.), Nocceler TBT (manufactured by Ouchi Shinko Chemical Industrial Co., Ltd.), Nocceler TS (manufactured by Ouchi Shinko Chemical Industrial Co., Ltd.), Nocceler TRA (manufactured by Ouchi Shinko Chemical Industrial Co., Ltd.), Nocceler TOT-N (manufactured by Ouchi Shinko Chemical Industrial Co., Ltd.), and Nocceler TBZTD (manufactured by Ouchi Shinko Chemical Industrial Co., Ltd.).

Note that sulfur may be used as the crosslinking agent capable of crosslinking the α,β-unsaturated nitrile conjugated diene rubber and the ethylene-α-olefin-nonconjugated diene copolymer rubber via a monosulfide bond. Examples of sulfur include powdered sulfur, precipitated sulfur, colloidal sulfur, surface-treated sulfur, insoluble sulfur, and the like.

When using sulfur or a sulfur compound as the crosslinking agent (iii), it is preferable to use a crosslinking assistant (hereinafter may be referred to as "vulcanization accelerator") in combination with the crosslinking agent (iii). Examples of the vulcanization accelerator include sulfeneamide compounds such as N-cyclohexyl-2-benzothiazolylsulfenamide, N-oxydiethylene-2-benzothiazolylsulfenamide, and N,N-diisopropyl-2-benzothiazolylsulfenamide; thiazole compounds such as 2-mercaptobenzothiazole, 2-(2',4'-dinitrophenyl)mercaptobenzothiazole, 2-(4'-morpholinodithio)benzothiazole, and dibenzothiazyl disulfide; guanidine compounds such as diphenylguanidine, diorthotolylguanidine, diorthonitrileguanidine, orthonitrile biguanide, and diphenylguanidine phthalate; aldehydeamine or aldehyde-ammonia compounds such as an acetaldehyde-aniline reaction product, a butyraldehyde-aniline condensate, hexamethylenetetramine, and acetaldehyde ammonia; imidazoline compounds such as 2-mercaptoimidazoline; thiourea compounds such as thiocarbanilide, diethylthiourea, dibutylthiourea, trimethylthiourea, and diorthotolylthiourea; thiuram compounds such as tetramethylthiuram monosulfide, tetramethylthiuram disulfide, tetraethylthiuram disulfide, tetrabuthylthiuram disulfide, tetraoctylthiuram disulfide, and pentamethylenethiuram tetrasulfide; dithioate compounds such as zinc dimethyldithiocarbamate, zinc diethyldithiocarbamate, zinc di-n-butyldithiocarbamate, zinc ethylphenyldithiocarbamate, zinc butylphenyldithiocarbamate, sodium dimethyldithiocarbamate, selenium dimethyldithiocarbamate, and tellurium dimethyldithiocarbamate; xanthate compounds such as zinc dibutylxanthate; inorganic zinc compounds such as zinc oxide, active zinc oxide, surface-treated zinc oxide, zinc carbonate, composite zinc oxide, and composite active zinc oxide; and the like. These compounds can be used either individually or in combination of two or more kinds.

The content of the component (i) in the rubber composition according to the present invention is preferably 20 to 70 mass%, more preferably 25 to 65 mass%, and particularly preferably 30 to 60 mass%. If the content of the component (i) is below 20 mass%, the oil resistance of a molded article obtained by using the rubber composition according to the present invention may decrease. If the content of the component (i) is beyond 70 mass%, the heat resistance of a molded article obtained by using the rubber composition according to the present invention may decrease.

The content of the component (ii) is preferably 30 to 80 mass%, more preferably 35 to 75 mass%, and particularly preferably 40 to 70 mass%. If the content of the component (i) is below 30 mass%, the heat resistance of a molded article obtained by using the rubber composition according to the present invention may decrease. If the content of the component (ii) is beyond 80 mass%, the oil resistance of a molded article obtained by using the rubber composition according to the present invention may decrease. Note that (i)+(ii)=100 mass%.

The content of the component (iii) is preferably 0 to 0.1 to 20 parts by mass based on 100 parts by mass of the (co)polymers contained in the rubber composition according to the present invention. If the content of the component (iii) is below 0.1 parts by mass, the strength of a molded article obtained by using the rubber composition according to the present invention may decrease. If the content of the component (iii) is beyond 20 parts by mass, the elongation of a molded article obtained by using the rubber composition according to the present invention may decrease.

The rubber composition according to the present invention may include polymer components other than the component (i), the component (ii), and the component (iii). Examples of such other polymer components include natural rubber, butadiene rubber, isoprene rubber, chloroprene rubber, styrene-butadiene copolymer rubber, butadiene-isoprene copolymer rubber, butadiene-styrene-isoprene copolymer rubber, acrylonitrile-butadiene copolymer rubber, butyl rubber, and the like.

The rubber composition according to this embodiment may include additives such as a reinforcing agent, a filler, a plasticizer, a processing aid, a softener, an aging preventive, a UV absorber, a flame retardant, an antifungal, a fungicide, and a coloring agent.

Examples of the reinforcing agent include carbon black, silica, aluminum hydroxide, alumina, and the like. Among these, carbon black is preferable. These compounds may be used either individually or in combination.

Examples of the carbon black include SRF carbon black, ISAF carbon black, HAF carbon black, FEF carbon black, GPF carbon black, SRF carbon black, FT carbon black, MT carbon black, acetylene carbon black, Ketjen Black, and the like.

The content of the reinforcing agent is preferably 5 to 200 parts by mass, more preferably 10 to 150 parts by mass, and particularly preferably 20 to 120 parts by mass based on 100 parts by mass of the polymers in the rubber composition.

Examples of the filler include limestone powder, light calcium carbonate, ultrafine activated calcium carbonate, special calcium carbonate, basic magnesium carbonate, kaolin clay, fired clay, pyrophyllite clay, silane-treated clay, synthetic calcium silicate, synthetic magnesium silicate, synthetic aluminium silicate, magnesium carbonate, aluminum hydroxide, magnesium hydroxide, magnesium oxide, kaolin, sericite, talc, flour talc, wollastonite, zeolite, bentonite, asbestos, processed mineral fiber (PMF), chalk, sepiolite, potassium titanate, ellestadite, gypsum fiber, glass balloon, silica balloon, hydrotalcite, flyash balloon, shirasu baloon, carbon balloon, barium sulfate, aluminum sulfate, calcium sulfate, molybdenum disulfide, and the like. These fillers may be used either individually or in combination of two or more kinds.

The content of the filler is preferably 0 to 200 parts by mass, more preferably 0 to 100 parts by mass, and particularly preferably 0 to 50 parts by mass based on 100 parts by mass of the polymers in the rubber composition.

Examples of the plasticizer include phthalates such as dimethyl phthalate, diethyl phthalate, dibutyl phthalate, diisobutyl phthalate, dioctyl phthalate, butyloctyl phthalate, di-(2-ethylhexyl) phthalate, diisooctyl phthalate, and diisodecyl phthalate, fatty acid esters such as dimethyl adipate, diisobutyl adipate, di-(2-ethylhexyl) adipate, diisooctyl adipate, diisodecyl adipate, octyldecyl adipate, di-(2-ethylhexyl)azelate, diisooctyl azelate, diisobutyl azelate, dibutyl sebacate, di-(2-ethylhexyl) sebacate, and diisooctyl sebacate, trimellitates such as isodecyl trimellitate, octyl trimellitate, n-octyl trimellitate, and isononyl trimellitate, di-(2-ethylhexyl) fumarate, diethylene glycol monooleate, glycerol monoricinoleate, trilauryl phosphate, tristearyl phosphate, tri(2-ethylhexyl) phosphate, epoxidized soybean oil, polyether esters, and the like. These plasticizers may be used either individually or in combination of two or more kinds.

The content of the plasticizer is preferably 0 to 150 parts by mass, more preferably 0 to 100 parts by mass, and particularly preferably 0 to 80 parts by mass based on 100 parts by mass of the polymers in the rubber composition.

Examples of the processing aid include stearic acid, oleic acid, lauric acid, zinc stearate, commercially available processing aids, and the like. These processing aids may be used either individually or in combination of two or more kinds. The content of the processing aid is preferably 0 to 20 parts by mass, more preferably 0.5 to 10 parts by mass, and particularly preferably 1 to 5 parts by mass based on 100 parts by mass of the polymers in the rubber composition.

Examples of the softener include the above-mentioned mineral extender oils, vegetable oil softeners, factice, and the like. These softeners may be used either individually or in combination. Examples of the vegetable oil softener include castor oil, cotton seed oil, linseed oil, rapeseed oil, soya bean oil, palm oil, coconut oil, arachis oil, Japan tallow, and the like. Examples of the factice include brown factice, white factice, candy factice, and the like. The content of the softener is preferably 0 to 150 parts by mass, more preferably 0 to 100 parts by mass, and particularly preferably 0 to 80 parts by mass based on 100 parts by mass of the polymers in the rubber composition.

Examples of the aging preventive include aging preventives based on compounds such as naphthylamine, diphenylamine, p-phenylenediamine, quinoline, hydroquinone derivatives, a mono, bis, or trispolyphenol, thiobisphenol, hindered phenol, phosphate, imidazole, nickel dithiocarbamate, and phosphoric acid, and the like. These aging preventives may be used either individually or in combination of two or more kinds. The content of the aging preventive is preferably 0 to 10 parts by mass, more preferably 0 to 7 parts by mass, and particularly preferably 0 to 5 parts by mass based on 100 parts by mass of the polymers in the rubber composition.

Examples of the UV absorber include benzophenones, benzotriazoles, salicylates, metal complex salts, and the like. These UV absorbers may be used either individually or in combination. The content of the UV absorber is preferably 0 to 10 parts by mass, more preferably 0 to 7 parts by mass, and particularly preferably 0 to 5 parts by mass based on 100 parts by mass of the polymers in the rubber composition.

The rubber composition according to this embodiment may be produced as follows, for example. The component (i) and the component (ii) are mixed at 70 to 180°C using a mixer such as a Banbury mixer to obtain a mixture. After cooling the resulting mixture, the crosslinking agent (iii) is mixed with the mixture using a Banbury mixer, a mixing roll, or the like to obtain a rubber composition according to this embodiment. A crosslinked rubber according to this embodiment may be produced by crosslinking the component (i) and the component (ii) by heating the rubber composition thus obtained to 130 to 250°C, for example. A molded article according to this embodiment may be produced by molding the crosslinked rubber thus obtained by die molding, extrusion molding, injection molding, or the like. When directly producing a molded article using the rubber composition, the rubber composition is molded by die molding, extrusion molding, injection molding, or the like at the above-mentioned temperature.

The component (i) and the component (ii) may be mixed in a solid state after coagulation. The component (i) and the component (ii) may be mixed in a specific ratio in a state in which the component (i) is in the form of an emulsion (latex) before being solidified and the component (ii) is emulsified after dissolution to obtain a mixed liquid. The polymer components may be coagulated and separated from the mixed liquid, and the resulting composite (composite rubber) containing the component (i) and the component (ii) may be mixed as described above. The component (i) and the component (ii) may be mixed in a specific ratio in a state in which the component (i) is dissolved and the component (ii) is in the form of a solution before being solidified to obtain a mixed liquid. The polymer components may be coagulated and separated from the mixed liquid, and the resulting composite (composite rubber) containing the component (i) and the component (ii) may be mixed as described above.

The molded article according to one embodiment of the present invention is formed of the above rubber composition or crosslinked rubber. Therefore, the molded article has excellent oil resistance and heat resistance.

As specific examples of the molded article according to this embodiment, a hose, a tube, packing, and the like are preferable.

### EXAMPLES

The present invention is described in detail below by way of examples. Note that the present invention is not limited to the following examples. In the examples, "part" refers to "part by mass" and "%" refers to "mass%" unless otherwise indicated. Each property value measuring method and each property evaluation method are given below.

Mooney viscosity (ML₁₊₄ (100°C)): The Mooney viscosity was measured using an L-rotor in accordance with JIS K 6300 (preheating time: 1 minute, rotor operation time: 4 minutes, temperature: 100°C).

Heat aging test: An aging test was performed in accordance with JIS K 6257. A change in hardness was measured in accordance with JIS K 6253. Specifically, a specimen was prepared by punching a vulcanized rubber sheet (thickness: 2 mm) in the shape of a No. 3 dumbbell. The specimen was suspended with heating 120°C for 240 hours using a gear aging tester to measure a change in hardness (AH=(hardness after aging)-(hardness before aging)).

Oil resistance: An immersion test was conducted in accordance with JIS K 6258 to measure a change in volume. Specifically, a specimen was prepared by punching a vulcanized rubber sheet (thickness: 2 mm) in the shape of a square (20×20 mm). The specimen was immersed in a test oil IRM903 at 100°C for 72 hours to measure a volume change rate (ΔV={(volume of specimen before immersion)-(volume of specimen after immersion)/(volume of specimen before immersion)} × 100 (%)).

Limiting viscosity: The solution viscosity (solvent: decalin (decahydronaphthalene)) was measured at 135°C using an Ubbelohde viscometer No. 0B in accordance with JIS K 7367-3 to determine the limiting viscosity.

Bending test: A bending crack test was conducted in accordance with JIS K 6260. Specifically, a specimen was prepared in accordance with JIS K 6260. The specimen was bent 50×10⁴ times at 23°C using a bending tester (reciprocated 300 times per minute). The bending resistance of the specimen was evaluated according to the following standard.
Good: No cracking
Bad: Cracking occurred

### (Synthesis Example 1) Production of NBR(2)

A stainless steel reactor of which the atmosphere was replaced by nitrogen was charged with 44 parts of acrylonitrile, 33 parts of butadiene, 23 parts of butyl acrylate (hereinafter referred to as "monomer mixture"), 4 parts of sodium lauryl sulfate, 0.2 parts of potassium persulfate, and 200 parts of water. The components were polymerized at 40°C. When the polymerization conversion rate reached about 90% (reaction time: 8 hours), the copolymerization reaction was terminated by the addition of 0.5 parts of N,N-diethylhydroxylamine to the reaction system. Then, a 0.25% calcium chloride aqueous solution was added to the reaction system to coagulate the copolymer rubber. After sufficiently washing the coagulated product, the product was dried at about 90°C for 3 hours to obtain a copolymer (NBR(2)). The NBR(2) had a Mooney viscosity (ML₁₊₄ (100°C)) of 80. The content of the structural units derived from acrylonitrile was 43%, the content of the structural units derived from butadiene was 35%, and the content of the structural units derived from butyl acrylate was 22%.

Content of structural units: The nitrogen content in the copolymer was measured by elemental analysis ("HP5890A" manufactured by Hewlett Packard). The content of the structural units derived from acrylonitrile was calculated from the measured value. The content of the structural units derived from butyl acrylate in the copolymer was measured by pyrolytic gas chromatography ("2400II CHNS/0 Analyzer" manufactured by Perkin-Elmer). The content of the structural units derived from butadiene was obtained by using the expression: {100-(content of structural units derived from acrylonitrile + content of structural units derived from acrylonitrile)}.

### (Synthesis Example 2) Production of ultra-high-molecular-weight EPR having a limiting viscosity of 7.0 dl/g

A polymerization container, 401 1 in capacity, was successively charged with ethylene (1.7 Nm³/hr), propylene (4.61/hr) and 5-ethylidene-2-norbornene (ENB) (220 ml/hr) so that the components were subjected to random copolymerization at 29°C for 0.2 hours by a normal solution polymerization method using hexane (188 l/hr) as a solvent in the presence of an organoaluminum compound ((C₂H₅)_{1.5}AlCl_{1.5})=0.18 g/l-hexane of Ziegler catalyst and a soluble vanadium compound (VOCl₃)=0.013g/l-hexane. During random copolymerization, VOCl₃ was reduced to such an extent that VOCl₃ was not inactivated and the amount of hydrogen gas (molecular-weight modifier) was adjusted to 20 ppm or less with respect to the amount of the monomer mixture to produce an ultra-high-molecular-weight EPR.

The resulting ethylene-α-olefin-nonconjugated diene copolymer rubber (ethylene-α-olefin-ethylidenenorbornane copolymer) had a limiting viscosity (η) of 7.0 dl/g at 135°C in a decalin solvent. The content of the structural units derived from ethylene was 67%, the content of the structural units derived from the α-olefin was 28.5%, and the content of the structural units derived from 5-ethylidene-2-norbornene (ENB) was 4.5%. A hexane solution of the EPR was prepared so that the EPR concentration was 4%. After the addition of oil (softener, "Diana Process PW90" manufactured by Idemitsu Kosan Co., Ltd.) to the solution in an amount of 100 parts based on 100 parts of the EPR, the mixture was stirred and subjected to steam stripping to obtain a composition. The composition was dried to obtain an oil-extended ethylene-α-olefin-nonconjugated diene copolymer rubber (also referred to as "EP(1)").

### (Synthesis Example 3) Production of EPR having a limiting viscosity of 3.0 dl/g

An EPR was produced using the same solvent and catalysts as those used in Synthesis Example 2 in a relatively highly active state while adjusting the amount of hydrogen gas (molecular-weight modifier) to 21 ppm or more with respect to the amount of the monomer mixture. The resulting EPR had a content of the structural units derived from ethylene of 67%, a content of the structural units derived from the α-olefin of 28.5%, and a content of the structural units derived from 5-ethylidene-2-norbornene (ENB) of 4.5%. The above-mentioned oil was added to the EPR in an amount of 50 parts based on 100 parts of the EPR in the same manner as in Synthesis Example 2 to obtain an oil-extended ethylene-α-olefin-nonconjugated diene copolymer rubber (also referred to as "EP(2)").

### (Example 1)

Sixty parts of the NBR(1) (low-butadiene NBR, "N215SL" manufactured by JSR Corporation), 80 parts of the EP(1), 5 parts of active zinc oxide ("Zinc Oxide" manufactured by Sakai Chemical Industry Co., Ltd.), 1 part of stearic acid (manufactured by Kao Corporation), 90 parts of carbon ("Seast 116" manufactured by Tokai Carbon Co., Ltd.), 7 parts of a softener ("Fukkol Flex 2050N" manufactured by Fuji Kosan Co., Ltd.), 0.5 parts of an aging preventive ("Nocrac RD" manufactured by Ouchi Shinko Chemical Industrial Co., Ltd.), and 2 parts of an aging preventive ("Nocrac MB" manufactured by Ouchi Shinko Chemical Industrial Co., Ltd.) were mixed using a Banbury mixer (start temperature: 100°C). Four parts of a vulcanization accelerator ("Nocceler TOT-N' manufactured by Ouchi Shinko Chemical Industrial Co., Ltd.), 1.5 parts of a vulcanization accelerator ("Nocceler M-60" manufactured by Ouchi Shinko Chemical Industrial Co., Ltd.), 4 parts of a vulcanization accelerator ("Nocceler EP60" manufactured by Ouchi Shinko Chemical Industrial Co., Ltd.), and 2.2 parts of a crosslinking agent ("Vulnoc R" manufactured by Ouchi Shinko Chemical Industrial Co., Ltd.) were mixed with the mixture at 50°C using a roll to prepare a rubber composition. The rubber composition was mixed to obtain an uncrosslinked rubber having a Mooney viscosity (ML₁₊₄ (100°C)) of 77.5.

The uncrosslinked rubber was molded at 170°C for 10 minutes to obtain a sheet-shaped crosslinked rubber (molded article). The evaluation results for the molded article were as follows. Specifically, the heat aging test was 120°C, a change (AH) in hardness after conducting the test for 240 hours was 10, the volume change rate (ΔV) determined by the oil resistant test IRM903 (at 100°C for 72 hours) was 64%, and the bending test evaluation result was "Good".

### (Examples 2 to 5 and Comparative Examples 1 to 3)

A rubber composition, a crosslinked rubber, and a molded article were obtained in the same manner as in Example 1, except for changing the composition as shown in Table 1. The property value measurement results and the property evaluation results are shown in Table 1. In Table 1, "NBR(3)" indicates an NBR of which the content of the structural units derived from butadiene was high ("N236H" manufactured by JSR Corporation, content of structural units derived from butadiene: 68%), and "Sulfur" indicates "Sulfur Powder"(manufactured by Tsurumi Chemical Co., Ltd.).

**TABLE 1**

| Composition (parts) | | Example 1 | Example 2 | Example 3 | Example 4 | Example 5 | Comparative Example 1 | Comparative Example 2 | Comparative Example 3 |
|---|---|---|---|---|---|---|---|---|---|
| (i) | NBR(1) (butadiene unit content: 52%) | 60 | 60 | 50 | 60 | - | - | 60 | 60 |
| | NBR(2) (butadiene unit content: 33%) | - | - | - | - | 60 | - | - | - |
| | NBR(3) (butadiene unit content: 68%) | - | - | - | - | - | 50 | - | - |
| ii) | EP(1) (limiting viscosity [η]: 7.0 dl/g) | 80 | 80 | 100 | 80 | 80 | 100 | - | - |
| EP(2) (limiting viscosity [η]: 3.0 dl/g) | | - | - | - | - | - | - | 60 | 60 |
| Active zinc oxide | | 5 | 5 | 5 | 5 | 5 | 5 | 5 | 5 |
| Stearic acid | | 1 | 1 | 1 | 1 | 1 | 1 | 1 | 1 |
| Seast 116 | | 90 | 90 | 90 | 90 | 90 | 90 | 90 | 90 |
| Fukkol Flex 2050N | | 7 | 7 | 0 | 7 | 7 | 0 | 27 | 27 |
| Nocrac RD | | 0.5 | 0.5 | 0.5 | 0.5 | 0.5 | 0.5 | 0.5 | 0.5 |
| Nocrac MB | | 2 | 2 | 2 | 2 | 2 | 2 | 2 | 2 |
| Nocceler TOT-N | | 4 | 4 | 4 | 4 | 4 | 4 | 4 | 4 |
| Nocceler M-60 | | 1.5 | 1.5 | 1.5 | 1.5 | 1.5 | 1.5 | 1.5 | 1.5 |
| Nocceler EP60 | | 4 | 4 | 4 | 4 | 4 | 4 | 4 | 4 |
| (iii) | Vulnoc R | 2.2 | 3.3 | 3.3 | - | 3.3 | 3.3 | - | - |
| | Sulfur | - | - | - | 0.8 | - | - | 2.2 | 0.8 |
| Total | | 257.2 | 258.3 | 261.3 | 255.8 | 258.3 | 261.3 | 257.2 | 255.8 |

| Properties | | | | | | | | | |
|---|---|---|---|---|---|---|---|---|---|
| Mooney viscosity (ML₁₊₄ (100°C)) | | 77.5 | 76.5 | 80 | 78.2 | 85 | 82 | 34.5 | 34.5 |
| Heat aging test (change in hardness (AH) (120°C×240 hours)) | | 10 | 11 | 11 | 14 | 11 | 17 | 20 | 25 |
| Immersion test (volume change rate ΔV (%)) (IRM903, 100°C×72 hours) | | 63.6 | 54.8 | 65 | 69.6 | 55 | 134 | 79 | 88 |
| Bending test (number of bending (50×10⁴)) | | Good | Good | Good | Good | Good | Bad | Bad | Bad |

As shown in Table 1, the molded articles formed by using the rubber compositions of Examples 1 to 5 showed a small change in hardness (AH) when subjected to the heat aging test (heat resistance test) (for example, exhibited excellent heat resistance), showed a small volume change rate (ΔV) when subjected to the immersion test (for example, exhibited excellent oil resistance), and exhibited excellent bending resistance as compared with the molded articles formed by using the rubber compositions of Comparative Examples 1 to 3.

### INDUSTRIAL APPLICABILITY

A molded article formed by using the rubber composition or the crosslinked rubber according to the present invention is suitable as automotive components such as a hose, a tube, or packing.

## Claims

1. A rubber composition comprising (i) an α,β-unsaturated nitrile conjugated diene rubber containing structural units derived from a conjugated diene in an amount of 30 to 60 mass% with respect to the total structural units, (ii) an ethylene-α-olefin-nonconjugated diene copolymer rubber having a limiting viscosity of 3.3 dl/g or more measured at 135°C in a decalin solvent, and (iii) a crosslinking agent.

2. The rubber composition according to claim 1, wherein the crosslinking agent (iii) is a crosslinking agent capable of crosslinking the α,β-unsaturated nitrile conjugated diene rubber (i) and the ethylene-α-olefin-nonconjugated diene copolymer rubber (ii) via a monosulfide bond.

3. The rubber composition according to claim 1 or 2, wherein the α,β-unsaturated nitrile conjugated diene rubber (i) is an acrylonitrile-butadiene rubber.

4. The rubber composition according to any one of claims 1 to 3, wherein the ethylene-α-olefin-nonconjugated diene copolymer rubber (ii) is an ethylene-propylene-nonconjugated diene copolymer rubber.

5. A crosslinked rubber obtained by crosslinking the rubber composition according to any one of claims 1 to 4.

6. A molded article comprising the crosslinked rubber according to claim 5.
